# EUROPÄISCHE PATENTANMELDUNG

(11) **EP 2 128 966 A1**
(43) Veröffentlichungstag der Anmeldung: **02.12.2009**
(21) Anmeldenummer: 08104151.9
(22) Anmeldetag: 29.05.2008
(51) Int. Cl.: H02K 53/00

(54) **Anordnung aus Permanentmagneten**

(71) Anmelder: Rinderle, Karl, 90411 Nürnberg (DE); Ringer, Ursula, 90411 Nürnberg (DE); Lechtenberg, Gheorghe-Puiu, 90411 Nürnberg (DE)
(72) Erfinder: Rinderle, Karl, 90411, Nürnberg (DE)
(74) Vertreter: Lösch, Christoph Ludwig Klaus

(57) **Zusammenfassung**

Die Erfindung betrifft eine Anordnung aus Permanentmagneten zur insbesondere auf magnetischen Anziehungs- und Abstoßungskräften beruhenden Relativbewegung eines ersten und eines zweiten Bauelementes zueinander, wobei die Permanentmagnete (18, 19, 118, 119) im Wesentlichen die Form eines geraden Kreiszylinders aufweisen und sich ein magnetischer Pol im Bereich der Deckfläche des Kreiszylinders und ein magnetischer Pol im Bereich der Grundfläche des Kreiszylinders befindet, wobei statische Magnete (19, 119) lagefest mit dem ersten Bauteil verbunden sind, wobei Polumkehrmagnete (18, 118) in dem zweiten Bauteil senkrecht zu ihrer Zylinderachse drehbar gelagert sind und mit einer Steuereinrichtung zur Steuerung der Rotationslage und/oder Rotationsbewegung einzelner oder mehrerer Polumkehrmagnete (18, 118) senkrecht zu ihrer Zylinderachse.

## Beschreibung

Die Erfindung betrifft eine Anordnung aus Permanentmagneten zur insbesondere auf magnetischen Anziehungs- und Abstoßungskräften beruhenden Relativbewegung eines ersten und eines zweiten Bauelementes zueinander.

Der Erfindung liegt die Aufgabe zugrunde, eine besonders einfach aufgebaute Antriebsanordnung und ein besonders einfaches Verfahren zur Erzeugung einer Relativbewegung anzubieten.

Diese Aufgabe wird für die Antriebsanordnung durch die Merkmale des Patentanspruchs 1 und für das Verfahren durch die Merkmale des Patentanspruchs 11 gelöst. Vorteilhafte Ausführungsformen für die Anordnung werden durch die Unteransprüche 2 - 10 realisiert.

Bei den erfindungsgemäßen Permanent-Magnet-Motoren erfolgt die Krafterzeugung durch Drehen der Polumkehr-Magnete, die im Weiteren auch Umpolmagnete genannt werden, um 180 Grad. Die erzeugte Vortriebs-Kraft aller möglichen Permanent-Magnet-Motor-Ausführungen erfolgt insbesondere durch Drehen der Polumkehr-Magnete um 180 Grad in Verbindung mit den statischen Magnete in der neutralen Zone.

Den Polumkehr-Magneten gegenüberliegend sind statischen Magnete zugeordnet, wobei die Magnete vorzugsweise zylindrische Form besitzen und in Längs-Richtung polarisiert sind. Daraus resultiert, dass die Magnete an der zylindrischen Mantel-Fläche zur Hälfte NORD und zur Hälfte SÜD polarisiert sind.

Die Magnete können sowohl im Durchmesser als auch in der Höhe variabel der Verwendung entsprechend gewählt werden.

Die Dreh- oder Längsbewegung eines Permanent-Magnet-Motors erfolgt durch Polumkehr der Polumkehr-Magnete um 180 Grad beim Ereichen der neutralen Stellung NORD-SÜD oder SÜD-NORD mit den gegenüberliegenden statischen Magnete.

Durch diese Drehung der Polumkehr-Magnete wird eine Abstosskraft und bei Annäherung zu nächsten Station (Permanent-Magnet) eine Anzugskraft erzeugt. Dieser Vorgang wiederholt sich fortlaufend.

Die Drehung dieser Magnete erfolgt schrittweise fortlaufend wahlweise durch verschiedene Steuerungsarten.

Durch die gewählte Anordnung erfolgt das Drehen der Magnete in einen weitgehend neutralen Magnetfeld. Die zum Polwechsel benötigte Kraft beträgt nur ein Bruchteil der Kraft die durch den Polwechsel erzeugt wird.

Die Polumkehr-Magnete können sowohl am Gehäuse und wahlweise auch auf dem Rotor oder Schlitten positioniert werden. Die statischen Magnete werden den Polumkehr-Magnete gegenüberliegend positioniert. Zum Antrieb der drehbar gelagerten Polumkehr-Magnete werden Zahnräder, Zahnriemen und/oder Zahnstangen verwendet.

Die eine Motoreinheit bildenden Bauteile sind im Allgemeinen baugleich und können der gewünschten Leistung entsprechend erweitert werden. Alle zur Motor-Erweiterung verwendeten Bauteile werden durch Zahnräder oder Zahnstangen getaktet.

Die Polwechsel-Magnete können sowohl am statischen Teil des Motors gelagert, aber auch auf den Rotoren oder Schlitten positioniert und gelagert sein.

Beim Verfahren zur Erzeugung einer Relativbewegung zwischen zwei Bauteilen ziehen sich mindestens zwei Magnete mit NORD-SÜD Polarisierung gegenseitig an und stoßen sich durch Polwechsel in der neutralen Zone gegenseitig ab.

Die verwendeten Magnete sind in der Längsrichtung Nord-Süd polarisiert und in runder Ausführung. Die Wirkrichtung der Magnete ist entweder die Mantelfläche am Umfang oder die Kreisfläche der Polumkehrmagnete, die zu den Mantelflächen am Umfang der statischen Magnete ausgerichtet sind.

Die zum Betrieb notwendigen Polwechsel können durch eigen erzeugte mechanische Energie oder mittels Servomotoren durchgeführt werden.

Bei diesem Verfahren werden die Polwechsel durch elektrische Schrittmotoren, Rotationsgetriebe oder Schritt-Umkehr-Getriebe mit Hubgetriebe durchgeführt.

Die Stromaufnahme der Schrittmotoren beträgt eine Teilmenge der erzeugten Leistung des Permanent-Magnet-Motor. Der Strombedarf wird während des Betriebes durch einen Generator erzeugt, welcher mit einer Starter- und Pufferbatterie verbunden sein kann.

Dadurch verfügt man über universell einsetzbare Permanent-Magnet-Motore, die unabhängig von fremder Energie stationär oder mobil genutzt werden können.

Die Anordnung kann beispielsweise als RPMM (Rotor-Permanentmagnet-Motor) mit statischen Magneten auf dem Rotor, Polwechsel-Magnete am Außenmantel und der Steuerung der Polwechsel durch Schrittmotoren ausgeführt sein. Bei der Ausführung als RPMM potenziert sich die durch Abstoßung und Anziehung der Magnete entstehende Kraft mit der Hebelwirkung des Rotordurchmessers. Eine Leistungssteigerung kann durch Vergrößern des Rotordurchmessers oder durch Verwendung stärkerer Magnete erfolgen.

Auch kann die Anordnung als LPMM (Linear-Permanentmagnet-Motor) mit statischen Magneten am Außenmantel, Polwechsel-Magnete auf dem Schlitten oder Rotor ausgebildet sein. Vorteilhafterweise erfolgt die Steuerung der Polwechsel durch Rotation-Taktgetriebe. Bei der Ausführung als LPMM entsteht durch Abstoßung und Anziehung der Mangnete eine kontinuierliche Vortriebskraft.

Des Weiteren kann die Anordnung als LPMM mit statischen Magneten im Paket von beispielsweise je 5 Magnete am Träger montiert und die Polwechsel-Magnete auf dem Schlitten montiert sein. Auch können bei einem RPMM Polwechsel-Magnete auf dem Rotor mit jeweils 2 Magneten vorhanden sein, wobei die Kreisflächen den statischen Magneten zugewandt sind.

Die Steuerung der Polwechsel kann durch eine Zahnstange, gesteuert durch ein Hubgetriebe, verbunden mit Schrittmotor oder Schritt-Umkehr-Getriebe erfolgen.

Auch kann die Anordnung als LPMM mit am Träger in Paketen zu beispielsweise je 5 Magneten montierten statischen Magneten oder als RPMM mit Polwechsel-Magneten auf dem Schlitten oder Rotor im Zentrum von je 4 statischen Magnet-Paketen ausgeführt sein.

Darüber hinaus kann die Anordnung als RPMMG (Rotor-Permanentmagnet-Motor-Generator) ausgeführt sein, wobei die 5'er-Pack Magnete mit Kupferwicklung als Spule ausgebildet sein können. Dabei wird durch die Rotation der Polumkehr-Magnete Strom in den Spulen erzeugt.

Die Steuerung der Permanent-Magnet-Motoren kann durch einen Schritt- oder Servo-Motor erfolgen. Auch ist es möglich die Motoren durch Rotation-Takt-Getriebe oder durch Schritt- oder Servo-Motor mit Hubgetriebe zu steuern. Die Steuerung mit Schritt-Motor mit Hub-Getriebe kann durch elektronische Schrittfolge-Zuordnung der im Permanent-Magnet-Motor jeder Station zugeordneten Schritt-Motoren erfolgen. Alternativ hierzu ist die Steuerung durch Servo-Motoren mit Hub-Getriebe durch induktive Sensoren für das Ein- und Ausschalten der Servo-Motoren in Abhängikeit der Rotorbewegung (RPMM) oder Schlittenbewegung (LPMM) möglich. Die Schritt- oder Servo-Motoren können insbesondere mit jedem Schritt 45 Grad drehen. Diese Drehung kann dann durch die Zahnrad-Übersetzungen der Motoren zu den Zahnrädern von ExzenterWellen im Verhältnis 1:2 auf 90 Grad Drehung erhöht werden.

Auch ist eine Steuerung des Permanent-Magnet-Motor durch ein Schritt-Umkehr-Getriebe mit Hubgetriebe möglich.

Die Erfindung ist anhand von Ausführungsbeispielen in den Zeichnungsfiguren weiter erläutert. Es zeigen:
Fig. 1 einen Querschnitt eines Rotor-Permanentmagnet-Motors (kurz RPMM) mit zwei Rotor-Scheiben als Träger der statischen Magnete;
Fig. 2 eine Draufsicht entlang des Schnittes A-B des RPMM aus Fig. 1;
Fig. 3 einen Querschnitt des RPMM aus Fig. 1 mit einer anderen Steuerung;
Fig. 4 einen vergrößerten Teilschnitt der Fig. 3 mit Zuordnung der Magnet-Polarität;
Fig. 5 eine Draufsicht entlang des Schnittes C-D des RPMM aus Fig. 3;
Fig. 6 eine Draufsicht auf die Steuerscheibe mit verstellbaren induktiven Sensoren aus Fig. 3;
Fig. 7 eine Draufsicht auf einen Linear-Permanent-Magnet-Motor (kurz LPMM) mit feststehenden Magneten am Außenmantel und geschalteten Magneten auf dem Schlitten;
Fig. 8 einen Querschnitt des LPMM aus Fig. 7;
Fig. 9 zwei Lagersäulen mit Zahnradantrieb für die Magnete aus Fig. 7;
Fig. 10 zwei Rotations-Taktantriebe auf zwei Ebenen in einer Schnittdarstellung;
Fig. 11 eine Teildraufsicht auf einen LPMM ohne Schlitten, mit drei Rotationstaktgetrieben und Steuerleiste;
Fig. 12 eine schematische Darstellung eines Schaltpunktes bei einem LPMM;
Fig. 13 einen Teilausschnitt einer Draufsicht auf einen RPMM mit zweifachem Wirkkreis auf dem Rotor;
Fig. 14 einen Teilquerschnitt des RPMM aus Fig. 13 mit einem Rotationstaktgetriebe;
Fig. 15 eine vergrößerte Teildarstellung aus Fig. 14 mit Darstellung der Feineinstellung der Schaltnocken zum Steuern des Rotationstaktgetriebes;
Fig. 16 einen Teilschnitt eines RPMM mit durch eine Welle und Zahnrad im Gehäuse drehbar gelagerten polumschaltbaren Magneten;
Fig. 17 ein Teilausschnitt eines Rotor-Permanent-Magnet-Motor-Generators (kurz RPMMG) mit als Spule ausgebildeten statischen Magneten;
Fig. 18 zwei Schritt-Umkehr-Getriebe mit Hubgetriebe im Teilschnitt zur Steuerung eines LPMM;
Fig. 19 ein Schalt-Schema für das Schritt-Umkehr-Getriebe aus Fig. 18;
Fig. 20 einen Teillängsschnitt durch einen RPMM mit zwei getrennten Magnetbahnen und einer ersten Schalteinheit;
Fig. 21 einen Teillängsschnitt durch einen RPMM mit zwei getrennten Magnetbahnen und einer zweiten Schalteinheit.

Identische Bauteile wurden in den verschiedenen Figuren mit gleichen Bezugszeichen versehen.

Die magnetische Polarisation der Permanentmagnete ist durch "N" für den magnetischen Nordpol und "S" für den magnetischen Südpol gekennzeichnet.

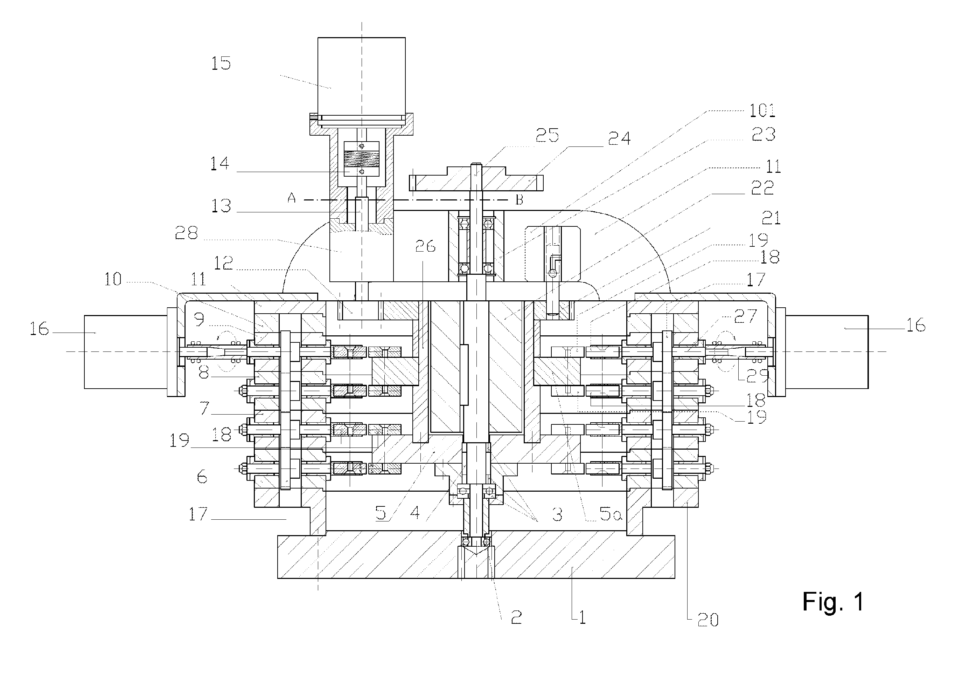

Bei den in Fig. 1 bis Fig. 6 dargestellten RPMM befinden sich die statischen Magnete auf dem Rotor und die Polwechsel-Magnete am Außenmantel. Die Steuerung der Polwechsel erfolgt durch Schrittmotoren.

Fig. 1 zeigt einen Querschnitt eines RPMM mit zwei Rotor-Scheiben als Träger der statischen Magnete. Die zum Betrieb notwendigen Polwechsel der im Außenmantel gelagerten Magnete werden durch Winkelcodierer und Schrittmotoren gesteuert.

Der RPMM besteht aus einer Grundplatte (1), welche im Zentrum die Lagerung (2) und die Rotorachse (25) aufnimmt. Auf der Rotorachse (25) ist der Rotor (5 und 5a) sowie der Rotorträger (26) und die Schwungmasse (22) montiert. Der Rotor (5) mit Rotorträger (26) und Rotor (5a) sowie das Zahnrad (21) sind durch Lager (3) und Freilauf (4) auf der Rotorachse (25) gelagert. Mit der Grundplatte (1) verbunden ist der Zentrierring (20). In diesem zentriert ist der Lagerring (6) angeordnet. Die Lagerringe (7, 8 und 9) sind jeweils durch die darunter liegenden Lagerringen zentriert. Der Lagerring (9) wird nach oben durch den Distanzring (10) und den Abschlussring (11) und dessen Dreipunkt-Lagerung mit der Lagerbuchse (23) abgeschlossen. Der Abschlussring (11) mit Dreipunkt-Lagerung der Lagerbuchse (23) nimmt die Rotorachse (25) auf. Die Rotorachse (25) trägt als Kraftabtrieb das Zahnrad (24).

Die Rotoren (5 und 5a) sind am Außendurchmesser auf der Ober- und Unterseite mit den Magneten (19) mit jeweils 8 Stück versehen. Diese Magnete sind mit 45 Grad am Umfang angeordnet. Die Lagerringe (6, 7, 8, 9) sind jeweils mit sechs Lagerungen mit 60 Grad Teilung am Umfang angeordnet. Diese sind zu Aufnahme der Magnete (18) mit Wellen (27) und Zahnräder (17) vorgesehen. Das Zahnrad (21) steht im Eingriff mit dem Zahnrad (12) der Welle (13) der Flexkupplung (14) zum Antrieb des Winkelcodierers (15) mit Lagergehäuse (28).

Der Winkelcodierer (15) steuert die sechs Schrittmotoren (16) paarweise gegenüberliegend. Die Wellen der Schrittmotoren (16) sind durch flexible Kupplungen (29) mit den Wellen (27) des Lagerringes (9) gekoppelt. Die Zahnräder (17) des Lagerringes (9) stehen im Eingriff mit den darunter liegenden Zahnräder (17) der Lagerringe (8, 7, 6). Auf der Rotorachse (25) gelagert ist die Schwungmasse (22) mit Rotor (5) und Rotoraufnahme für Rotor (5a) sowie Zahnrad (21).

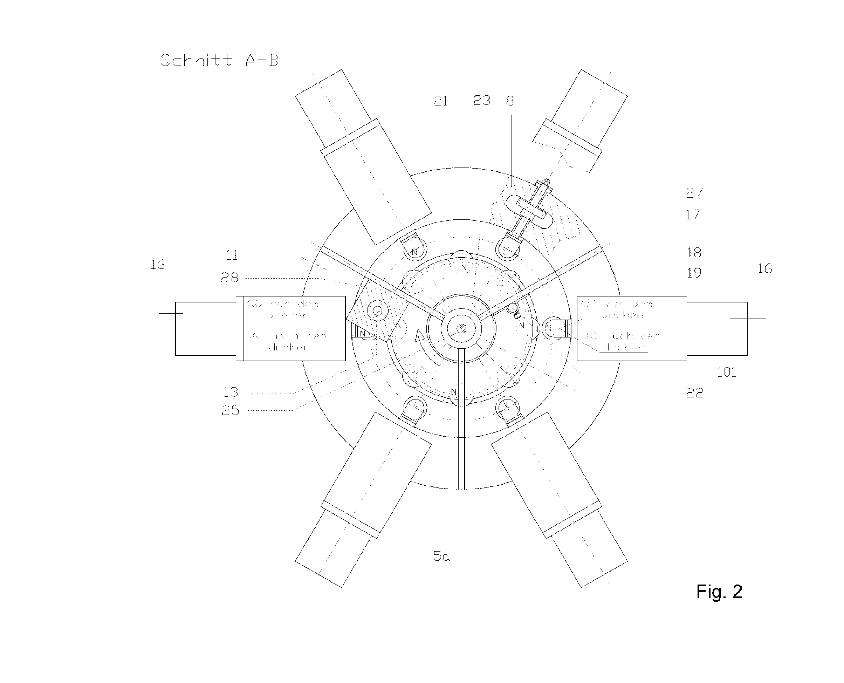

Fig. 2 zeigt eine Draufsicht entlang des Schnittes A-B aus Fig. 1. Die Rotorachse (25) gelagert in der Dreipunkt Lagerbuchse (23) und dem Abschlussring (11). Auf der Rotorachse gelagert ist, wie in Fig. 1 dargestellt, die Schwungmasse (22) der Rotorträger (26) mit Rotor (5a). An der Dreipunkt Lagerung (11) befestigt ist das Lagergehäuse (28) zur Aufnahme der Welle (13). Am Rotor (5a) mit Teilung 45 Grad sind die statischen Magnete (19) auf der Ober- und Unterseite gegenüberliegend befestigt.

Als Teilschnitt des Lagerringes (8) sichtbar ist die Welle (27) mit Zahnrad (17) und Magnet (18). Mit Teilung 60 Grad am Umfang sind 6 Schrittmotoren zum Drehen der Wellen (27) mit Zahnrad (17) und Magnet (18) vorhanden.

Die Anordnung besteht aus zwei Rotoren (5 u. 5a) mit fest angeordneten Permanent-Magnete (19), am Umfang auf der Ober- und Unterseite gegenüberliegend, mit gleicher Teilung 45 Grad. Die statischen Rotormagnete (19) sind im Wechsel NORD-SÜD, SÜD-NORD am Umfang angeordnet.

Die getakteten Magnete (18) sind am Umfang der Lagerringe (6-9) auf gleicher horizontaler Ebene den Rotor-Magnete (19) gegenüberliegend, jedoch mit 60 Grad Teilung angebracht. Diese Magnete (18) sind im Lagerring drehbar, übereinander gelagert und durch Zahnräder (17) verbunden, so dass der Polwechsel dieser Magnete durch Drehen der Wellen (27) um 180 Grad erreicht wird. Auch diese Magnete (18) haben zylindrische Form, mit der N-S Polarisierung in Längsrichtung.

Es sind 8 statischen Magnete (19) mit 45 Grad Teilung auf den Rotoren (5 u. 5a) auf Ober- und Unterseite gegenüberliegend angeordnet. Diese Magnete (19) sind im Wechsel N-S, S-N auf der Ober- und Unterseite der Rotoren (5 und 5a) befestigt.

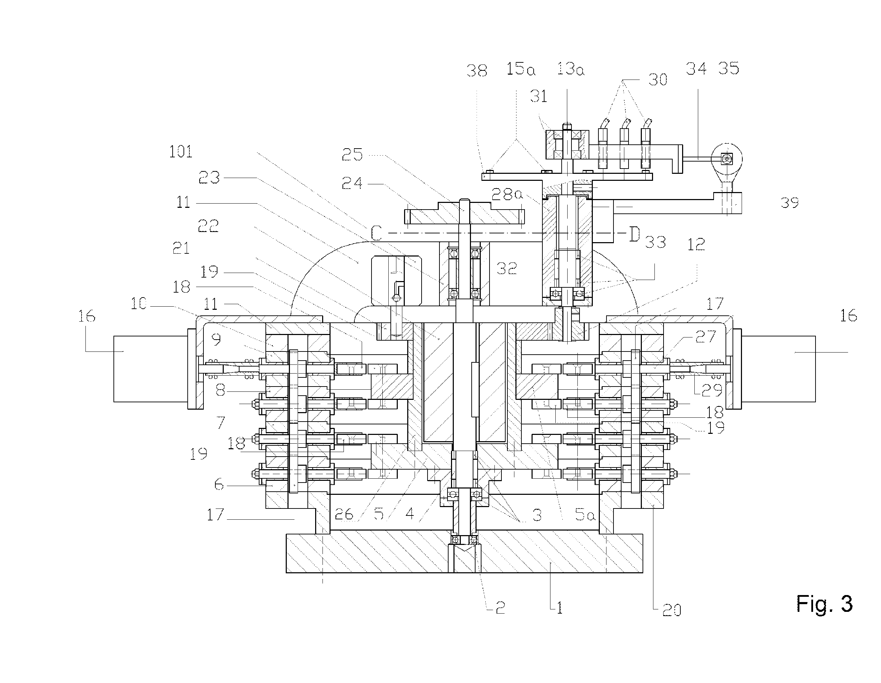

Fig. 3 zeigt einen Querschnitt des RPMM aus Fig. 1 mit einer im Vergleich zu Fig. 1 anderen Steuerung. Die Steuerung erfolgt hier durch induktive Sensoren. Das Zahnrad (21), im Eingriff mit Zahnrad (12), setzen die Wellen (13a) in Drehung. Die Welle (13a) ist gelagert im Lagergehäuse (28a), mittels Lager (33) und Rücklaufsperre (32).

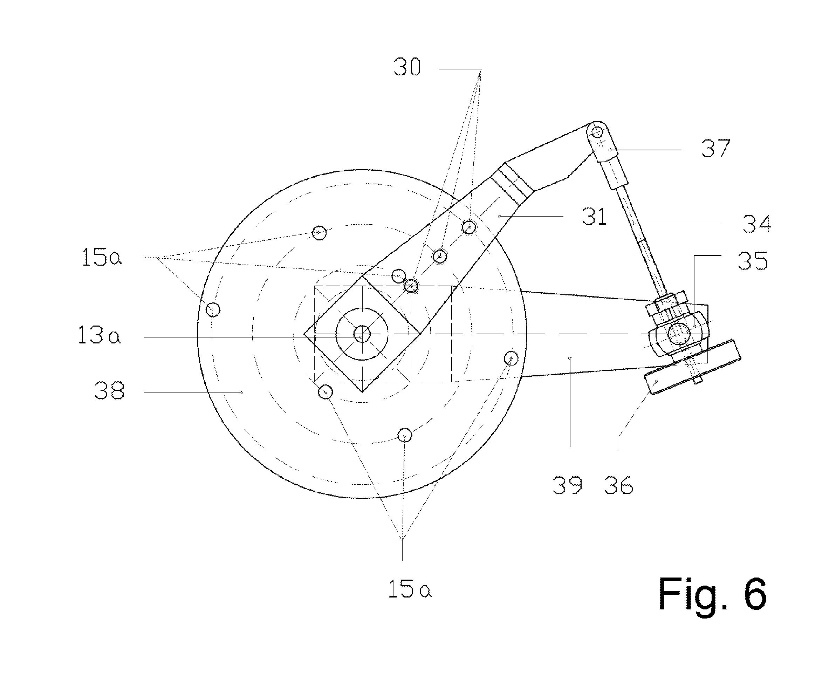

Auf der Welle (13a) befestigt ist die Schaltscheibe (38) und der Verstellarm (31) mit Lagerung. Im Verstellarm (31) angeordnet 3 induktive Sensoren (30). Ein Gelenk (37), wie in Fig. 6 dargestellt, weist eine Verstellspindel (34) und ein Kugelgelenk (35) auf. Am Lager-Gehäuse (28a) befestigt ist der Ausleger (39), zur Aufnahme des Kugelgelenkes (35). Auf der Schaltscheibe (38), sind die Schaltnocken (15a) angeordnet.

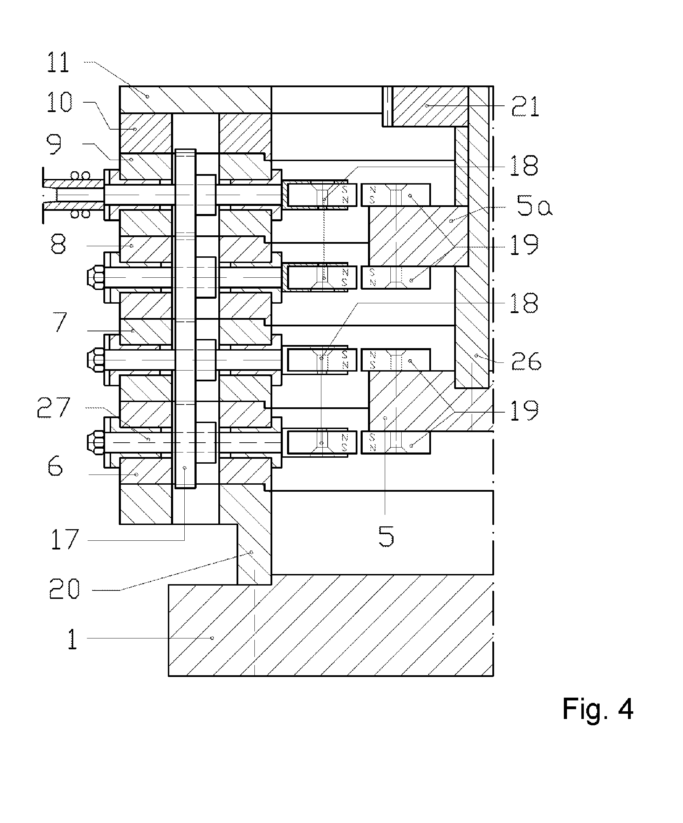

Fig. 4 zeigt einen vergrößerten Teilschnitt der Fig. 3 mit Zuordnung der Magnet-Polarität. Aus dieser Zeichnung ist die Anordnung der Polumkehr-Magnete (18) und der statischen Magnete (19) ersichtlich. Die Magnete (18 und 19) befinden sich gegenüberliegend am Schaltpunkt, vor dem Polwechsel der Magnete (18). Die Polarität der Magnete (18 und 19) ist durch die jeweilige Beschriftung ersichtlich: Die Bezeichnung "N" entspricht dem magnetischen Nordpol und die Bezeichnung "S" dem magnetischen Südpol.

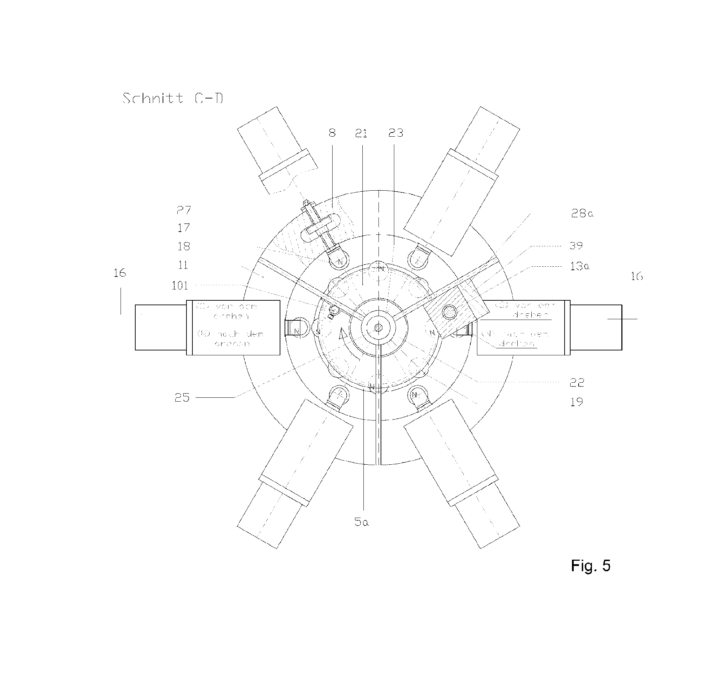

Fig. 5 zeigt eine Draufsicht entlang des Schnittes C-D des RPMM aus Fig. 3. Hierbei entspricht Fig. 5 in Teilen der Fig. 2, jedoch mit einer Welle (13a), einem Schaltnocken (15a) und einem Lagergehäuse für Schaltscheibe (28a).

Fig. 6 zeigt eine Draufsicht auf die Steuerscheibe mit verstellbaren induktiven Sensoren aus Fig. 3. Auf der Schaltscheibe (38) sind die Schaltnocken (15a) angeordnet. Auf der Welle (13a) gelagert ist der Verstellarm (31) mit 3 induktiven Sensoren (30), sowie Gelenk (37), Verstellspindel (34) und Kugelgelenk (35). Im Kugelgelenk (35) gelagert ist die Verstellmutter (36). Am Lagergehäuse (28a) befestigt ist der Ausleger (39), dieser ist Festpunkt zur Aufnahme des Kugelgelenkes (35).

In den in Fig.1 bis Fig. 6 dargestellten RPMM erfolgt die Steuerung der Polumkehr-Magnete (18) durch Schritt- oder Servo-Motoren. Diese Steuerung läuft folgendermaßen ab:

Die Polumkehr-Magnete (18) müssen zu den statischen Rotormagnete (19) entsprechend, ihrer Polarisation ausgerichtet werden. Nach Einschalten der Steuerung und Lösen des Fixierstifts (101) übernehmen die induktiven Sensoren (30) die Taktung der Schrittmotoren (16) paarweise gegenüberliegend. Der Rotor (5 und 5a) dreht sich, da die Polumkehr-Magnete (18) und die Permanent Magnete (19) einen Anzug und Abstoßungs-Zyklus, wechselseitig durchlaufen.

Durch Drehen der Polumkehr-Magnete (18) um 180 Grad bei Erreichen der neutralen Zone wechselt die bisherige Anzugskraft in Abstoßkraft.

Als neutrale Zone wird diejenige Zone bezeichnet, in der die Polumkehr-Magnete (18) und die statische Magnete (19) mit Nord-Süd oder Süd-Nord Polarität gegenüber liegend positioniert sind.

Der Befehl der Steuerung zum Polwechsel der Polumkehr-Magnete (18), erfolgt kurz vor Erreichen der neutralen Zone. Die 180 Grad-Drehung der Polumkehr-Magnete (18), ist bei Erreichen der neutralen Zone zur Hälfte, d.h. mit 90 Grad, erfolgt.

Durch Drehung der Polumkehr-Magnete (18) um 180 Grad, wird fortlaufend für jede Magnet-Paarung ein neuer Zyklus eingeleitet. Durch das Zahnrad (21) wird das im Eingriff stehende Zahnrad (12) sowie die Welle (13a) und mit ihr die Schaltscheibe (38) in Drehung versetzt. Auf dieser Schaltscheibe (38) angeordnet, sind die Schaltnocken (15a) in drei verschiedene Durchmessern, denen jeweils ein induktiver Sensor (3) zugeordnet ist.

Durch diese Anordnung ist es möglich, alle im Lagerring (6-9) drehbar gelagerten Polwechsel-Magnete (18), durch Drehen um 180 Grad fortlaufend im Wechsel zur Abstossung oder Anziehung, mit den am Rotor (5 und 5a) befestigten statischen Magnete (19) zu bringen.

Hierdurch wird der Rotor (5 und 5a) in Drehung versetzt. Der Polwechsel der drehbaren Polwechsel-Magnete (18), im Lagerring (6-9), erfordert nur ein Bruchteil der erzeugten Kraft. Der überschüssig erzeugte Strom kann gespeichert werden.

Das Zahnrad (24) ermöglicht den Antrieb eines Dynamos zur Stromerzeugung. So ist es möglich, den zum Betrieb der Schritt-Motoren (16) benötigten Strom zum Drehen der Polwechsel-Magnete (18) selbst zu erzeugen.

Die Steuerung der sechs am Umfang des Lagerringes (9) angeordneten Schritt-Motoren (16) erfolgt paarweise gegenüberliegend durch Winkelcodierer (15).

Fig. 4 ist ein Teilschnitt der Fig. 3. In dieser Darstellung begegnen sich vier Magnet-Paare (18 und 19) am Schaltpunkt sowie vier Magnet-Paare (18 und 19) auf der gegenüberliegenden Seite des Rotors (in Fig. 4 nicht dargestellt).

Auf Grund der Position der Polwechsel-Magnete (18) und der statischen Magnete (19) ist ersichtlich, dass die Anziehung den bewegungsneutralen Punkt erreicht hat. Durch Drehen der Welle (27) mit Zahnrad (17) im Lagerring (9) um 180 Grad erfolgt die Drehung aller unterhalb angeordneten Polwechsel-Magnete (18) in den Lagerringen (8, 7 und 6).

Alle 15 Grad des drehenden Rotors (5 und 5a) erfolgen 2 Impulse zum Umpolen der Polwechsel-Magnete (18). Bei 360 Grad ergeben sich 24 Umpolungen der Polwechsel-Magnete (18). Angesteuert werden jeweils 2 Schritt-Motoren, die um 180 Grad versetzt am Umfang des Abschlussringes (11) befestigt sind. Somit arbeiten jeweils 2 Motoren synchron.

Durch den Polwechsel der Magnete (18), erfolgt die fortlaufende Drehung der Rotoren (5 und 5a). Durch Ausschalten der Steuerung für die Motoren (16) stoppt der Rotor (5 und 5a). Das Einschalten der Steuerung für die Motoren (16) bewirkt erneut die Rotation der Rotoren (5 und 5a). Für eine Rotorumdrehung werden 3 Schalt-Impulse benötigt. Diese erfolgen in Drehrichtung fortlaufend zu je zwei sich gegenüberliegenden Motoren (16).

Für alle Permanent-Magnet-Motor-Ausführungen, ist der Polwechsel der Magnete (18) bei Erreichen der neutralen Zone die Voraussetzung für die Rotation des Rotors.

Durch Verstellen des Hebelarms (31) mittels Gelenk (37), Gewindestange (34) sowie der im Kugelgelenk (35) fixierten Stellschraube (36) in Fig. 6, - was einer Variation des Schaltpunktes entspricht - wird erreicht, den besten Wirkungsgrad des Permanent-Magnet-Motors einzustellen.

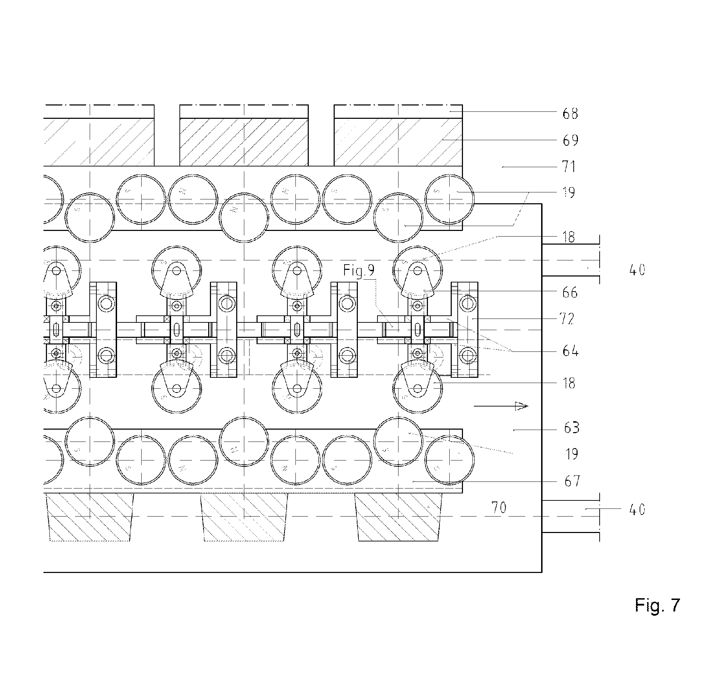

Fig. 7 zeigt eine Teildraufsicht auf einen LPMM mit feststehenden Magneten am Außenmantel und geschalteten Magneten auf dem Schlitten. Die magnetische Beeinflussung der statischen Magnete (19) und der Polumkehr-Magnete (18) führt zu einer linearen Bewegung entlang der in Fig. 7 dargestellten Pfeilrichtung. Somit wird eine translatorische Relativbewegung der Schlitten-Platte (63) zu der Grundplatte (71) erzeugt. Ferner zeigt Fig. 7 Führungswellen (40), Winkelträger (64) für Magnetwellen, Magnethalter (66), Magnet-Winkel-Schiene (67), eine Station (68), Magnetträger (69) für die statischen Magnete und einen Ausleger (70) des Magnetträgers für die statischen Magnete.

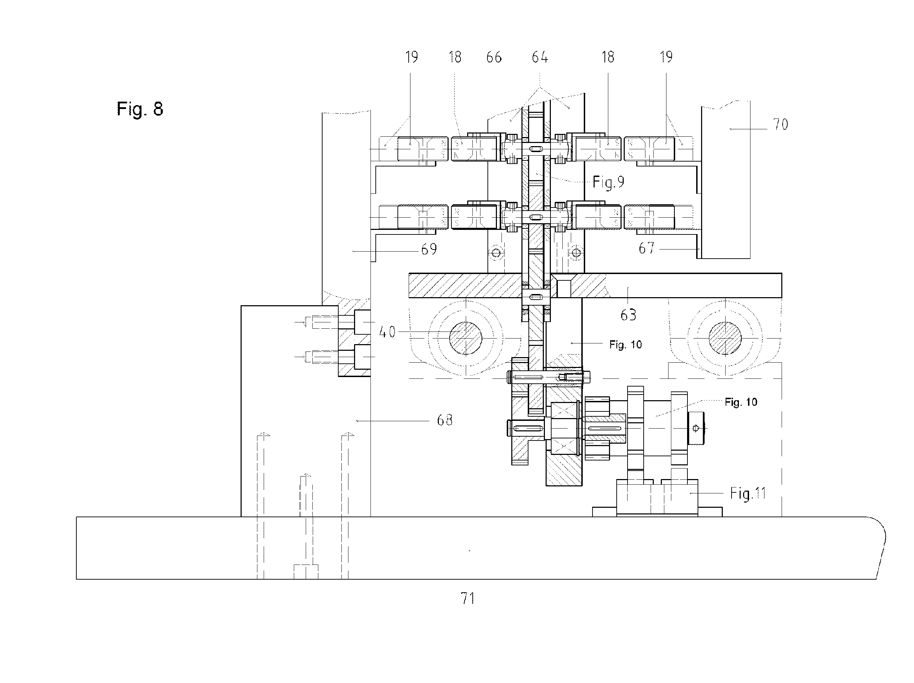

Fig. 8 zeigt einen Querschnitt des LPMM aus Fig. 7. Die beiden Ebenen von statischen Magneten (19) und Polumkehr-Magneten (18) stehen sich mit entgegengesetzter magnetischer Polarisierung gegenüber.

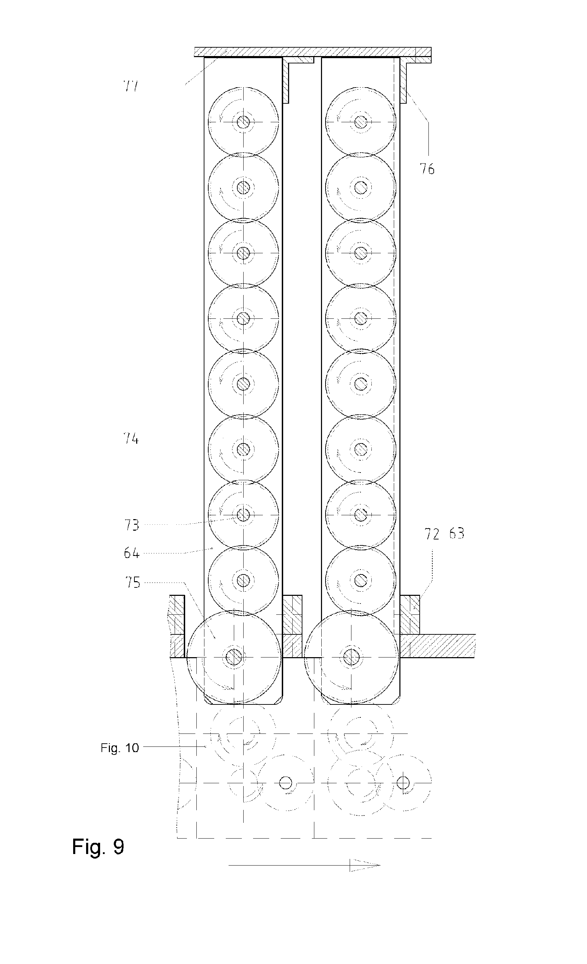

Fig. 9 zeigt zwei Lagersäulen mit Zahnradantrieb für die Magnete aus Fig. 7 mit einem Verbindungsteil (72), Wellen für Magnethalter (73), Synchronzahnrad (74), Zwischenrad (75), Winkel für Traverse (76) und einer Traverse (77).

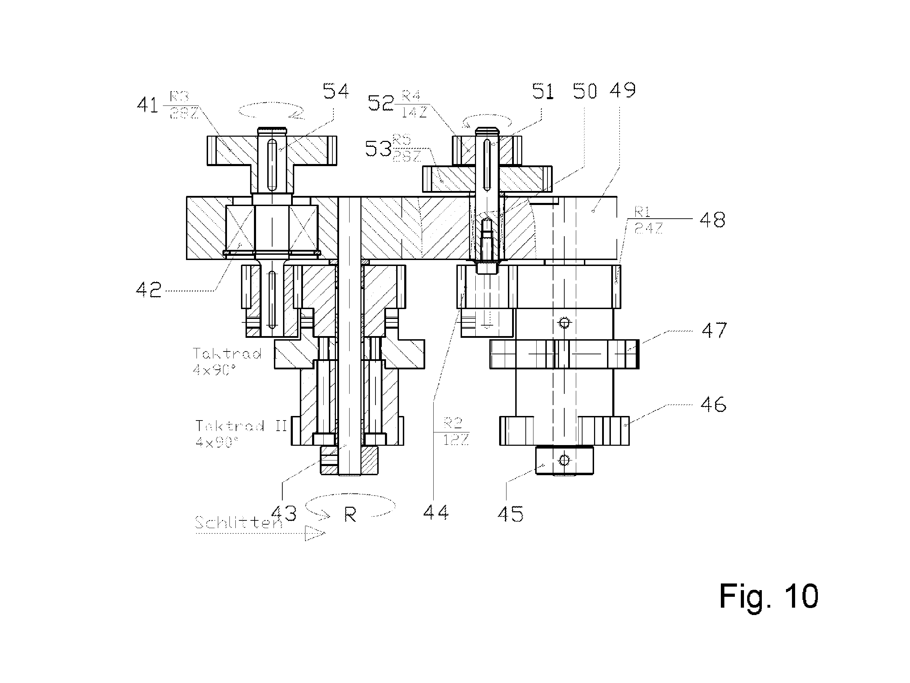

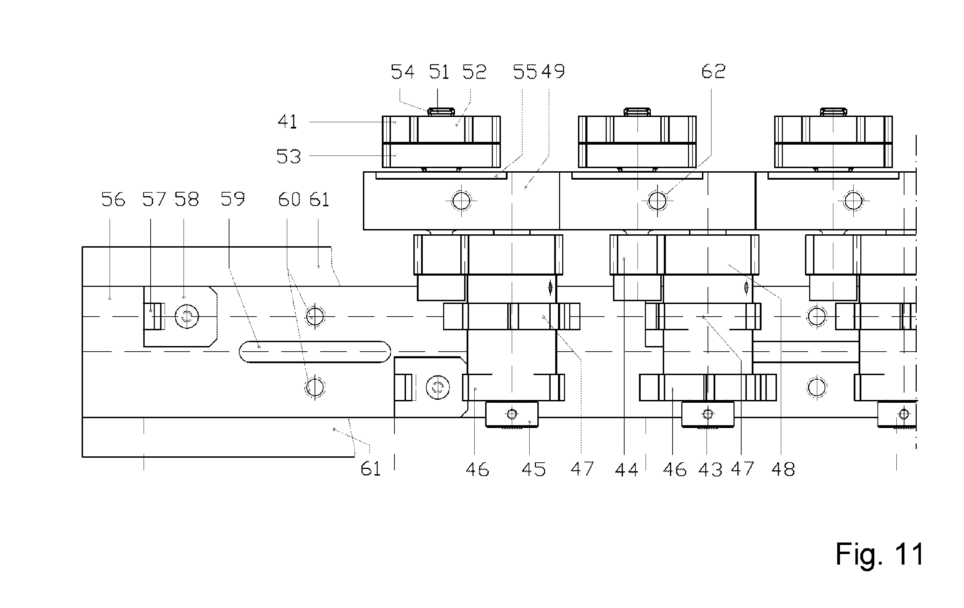

Fig. 10 zeigt zwei Rotations-Taktantriebe auf zwei Ebenen in einer Schnittdarstellung. Ein derartiges Rotations-Takt-Getriebe kann zur Steuerung eines RPMM oder LPMM dienen. In Fig. 10 sind zwei Einheiten des Rotations-Takt-Getriebes dargestellt. Eine Einheit besteht aus zwei Wellen (43) und (54). Auf Welle I (43) gelagert ist das Taktrad I (47) und das Taktrad II (46). Jedes Taktrad besitzt 4 Speichen um 90 Grad versetzt. Sie sind auf Lücke montiert (45 Grad), so dass in der Ansicht ein Taktrad mit 8 Speichen mit jeweils 45 Grad ersichtlich ist. Die beiden Räder sind jedoch in der Tiefe gestaffelt, sodass zu deren Betätigung zwei getrennte Bahnen mit Anschlag-Nocken (57, dargestellt in Fig. 11) notwendig sind.

Jeder Bahn ist ein Schalt-Zustand der Polumkehr-Magnete (18) zugeordnet. Daraus resultiert, dass die Stellung der Polumkehr-Magnete NORD und SÜD jeweils einer Bahn zugeordnet sind. Eine Fehlschaltung ist somit nicht möglich.

Der Abstand der Anschlag-Nocken (57, dargestellt in Fig. 11) beträgt auf jeder Bahn zwei Schalt-Längen. Diese sind zueinander um die Hälfte versetzt. Auf Welle I gelagert ist das Zahnrad R1 (48), welches mit Zahnrad R2 (44) im Eingriff ist und die Welle II (54) dreht. Die Übersetzung R1 zu R2 ist 1:2. Auf Welle II (54) gegenüberliegend befindet sich das Zahnrad R3 (41). Dieses steht im Eingriff mit Zahnrad R4 und überträgt die Drehung auf Zahnrad R5. Das Zahnrad R5 (53) überträgt seine Bewegung auf das in Fig. 9 dargestellt Zwischenrad (75). Somit werden alle darüber stehende Synchron-Zahnräder (74) und deren Wellen für Magnet-Halter (73) in Drehung versetzt (180 Grad), die auch in Fig. 7, Fig. 8 und Fig. 9 dargestellt sind.

Ferner zeigt Fig. 10 ein Kugellager (42), einen Stellring (45), ein Lager I (49) für den Rotationstaktantrieb, ein Lager mit Rücklaufsperre (50), eine Welle III (51) und ein Zahnrad IV (52).

Fig. 11 zeigt eine Teildraufsicht auf einen LPMM ohne Schlitten mit drei Rotationstaktgetrieben und Steuerleiste. Es ist eine Nut (55) für Winkelträger, eine Steuerleiste (56), eine Druckplatte (58), ein Einstell-Schlitz (59), Schrauben (60) zur Höheneinstellung, eine Führungsleiste (61) und ein Gewinde (62) für die Befestigung an der Schlittenplatte (63) dargestellt.

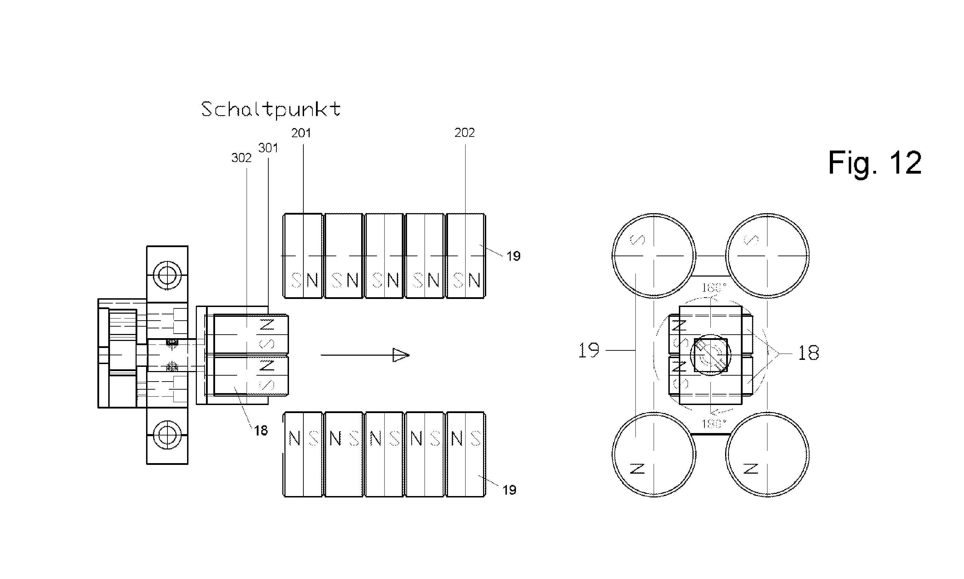

Fig. 12 zeigt eine schematische Darstellung eines Schaltpunktes bei einem LPMM mit Polumkehrmagneten (18) und statischen Magneten (19) und den Positionen (201), (202), (301) und (302).

Der theoretische Schaltpunkt liegt beim ersten der statischen Magnete (19) in der neutralen Zone Nord-Süd (201).

Bei den linear bewegten Magneten (18) ist die Stirnfläche den statischen Magneten (19) gegenüberliegend angeordnet, wobei das Zentrum der Magnetfläche (302) mit der Position (201) der statischen Magnete deckungsgleich ist.

Bei diesem System handelt es sich um zwei getrennten Bewegungen. Erstens, die linear Bewegung des Schlittens mit den Drehmagneten (18) und zweitens der Drehbewegung dieser Magnete (18) um 180 Grad.

Somit ist eine Vorverlegung des Schaltpunktes notwendig, sodass die Drehbewegung der Drehmagnete (18) bei Erreichen der Position (201) eine Drehung um 90 Grad durchgeführt hat.

Durch das Anbringen von Einstellmöglichkeiten, kann der Schaltpunkt während des Betriebes eingestellt oder optimiert werden.

Bei Erreichen von Punkt (202) der Drehmagnete (18) und der statischen Magnete (19) ist der theoretische Schaltpunkt erreicht.

Es ist jedoch notwendig, auch diesen Schaltpunkt soweit vorzuverlegen, dass beim Erreichen von Punkt (202) die Drehmagnete die 90 Grad Drehung vollzogen haben.

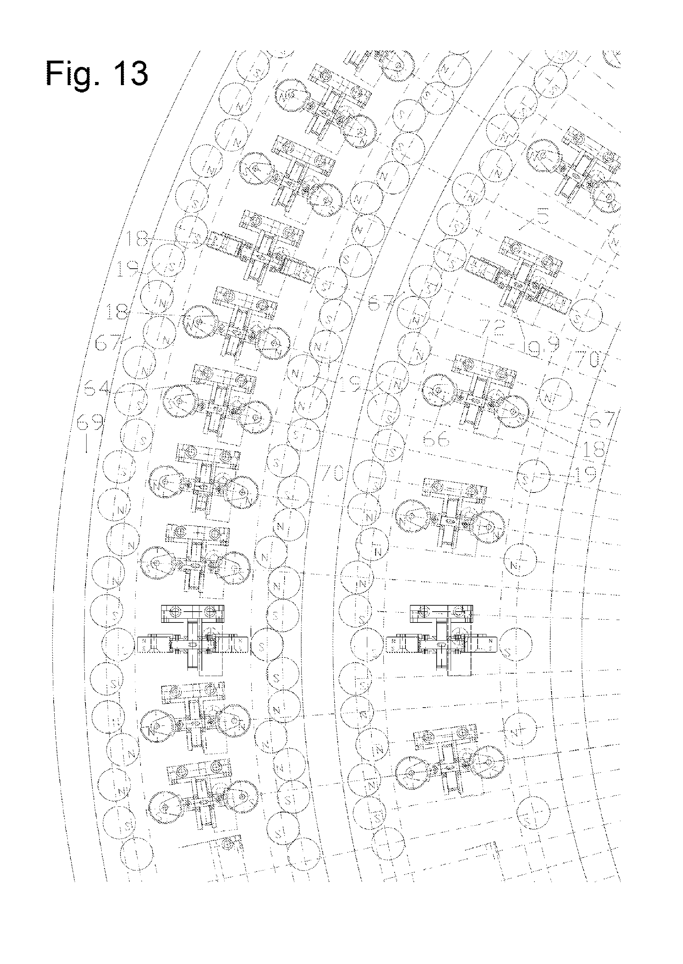

Fig. 13 zeigt einen Teilausschnitt einer Draufsicht auf einen RPMM mit zweifachem Wirkkreis auf dem Rotor. Die Polarität der Magnete ist aus Fig. 13 ersichtlich. Ferner zeigt Fig. 13 einen Winkelträger (64) für Magnetwellen, Magnethalter (66), Magnet-Winkel-Schiene (67) und einen Magnetträger (69) für statische Magnete.

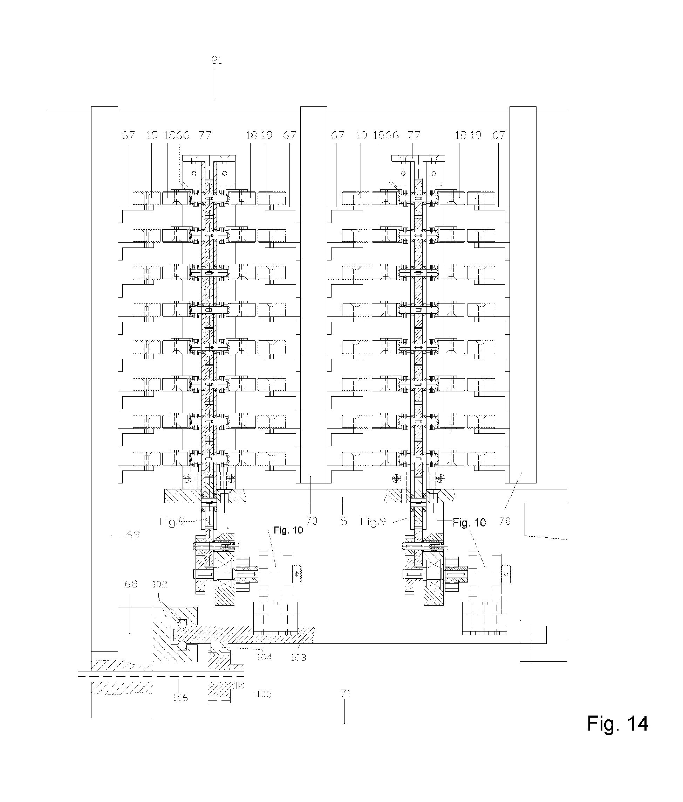

Fig. 14 zeigt einen Teilquerschnitt des RPMM aus Fig. 13 mit einem Rotationstaktgetriebe, wobei eine Station (68), ein Träger (81) für Magnethalter, ein Lagerklotz (102) mit Kugel, ein Zwischenboden (103) für das Bogensegment aus Fig. 11, eine Zahnstange (104), ein Zahnrad (105) und eine Verstellwelle (106) dargestellt sind.

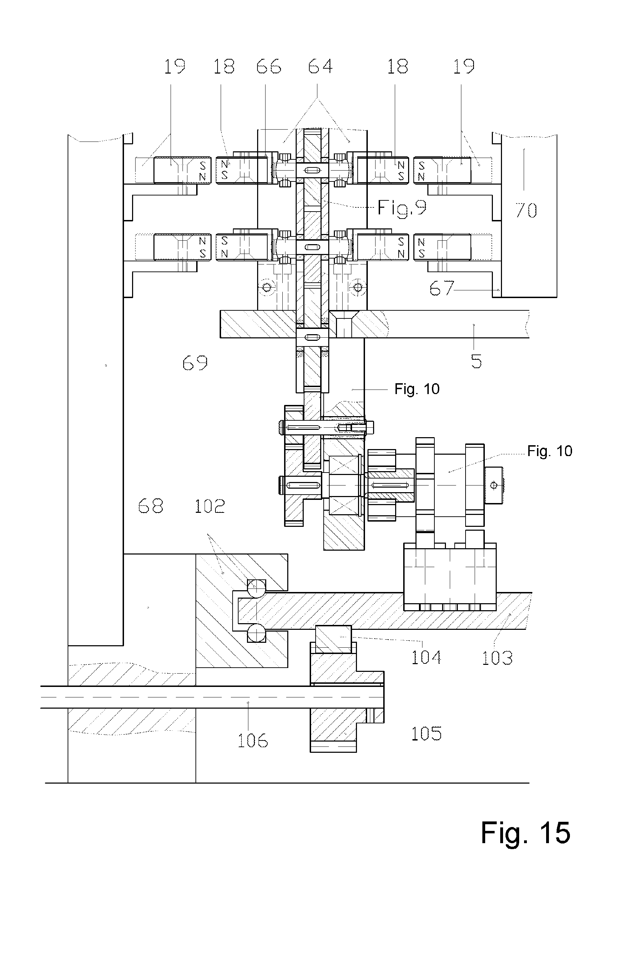

Fig. 15 zeigt eine vergrößerte Teildarstellung aus Fig. 14 mit Darstellung der Feineinstellung der Schaltnocken zum Steuern des Rotationstaktgetriebes.

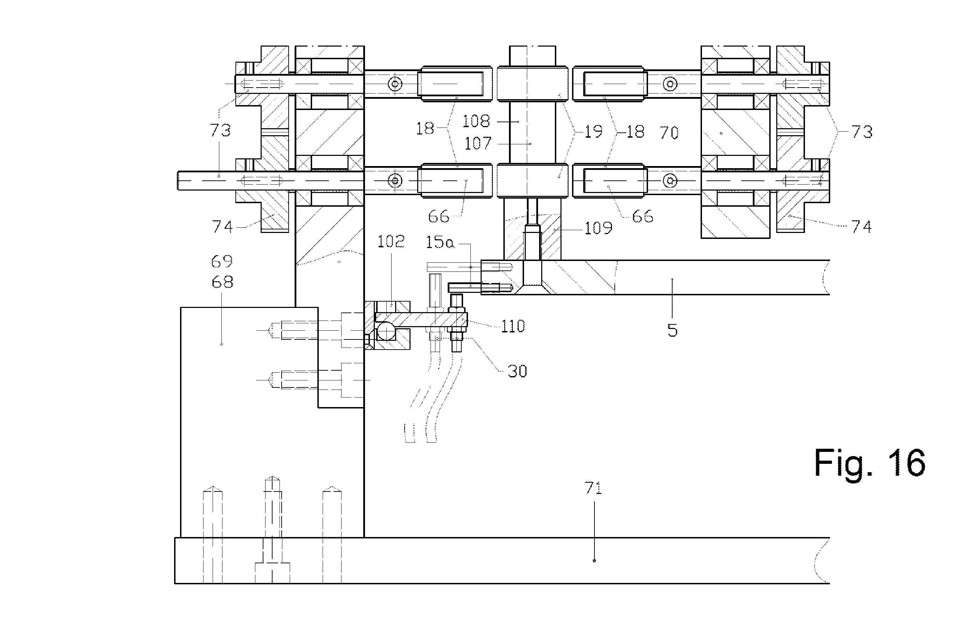

Fig. 16 zeigt einen Teilschnitt eines RPMM mit durch eine Welle und Zahnrad im Gehäuse drehbar gelagerten polumschaltbaren Magneten mit einem Zuganker (107), einer Distanzbuchse II (108), einer Distanzbuchse I (109) und einem Ring (110) für Sensoren.

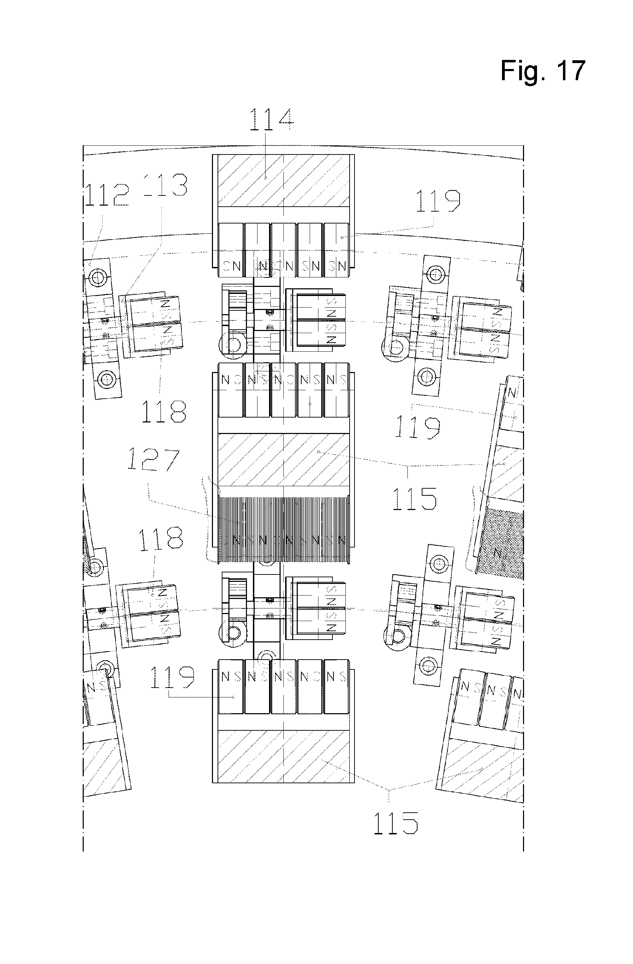

Fig. 17 zeigt ein Teilausschnitt eines RPMMG mit als Spule (127) ausgebildeten statischen Magneten (119). Dargestellt ist ein Verbindungsteil (112), Magnethalter (113), Magnetträger (114) für statische Magnete, ein Ausleger (115) für statische Magnete, Polumkehrmagnete (118), statische Magnete (119) und eine Spule (127).

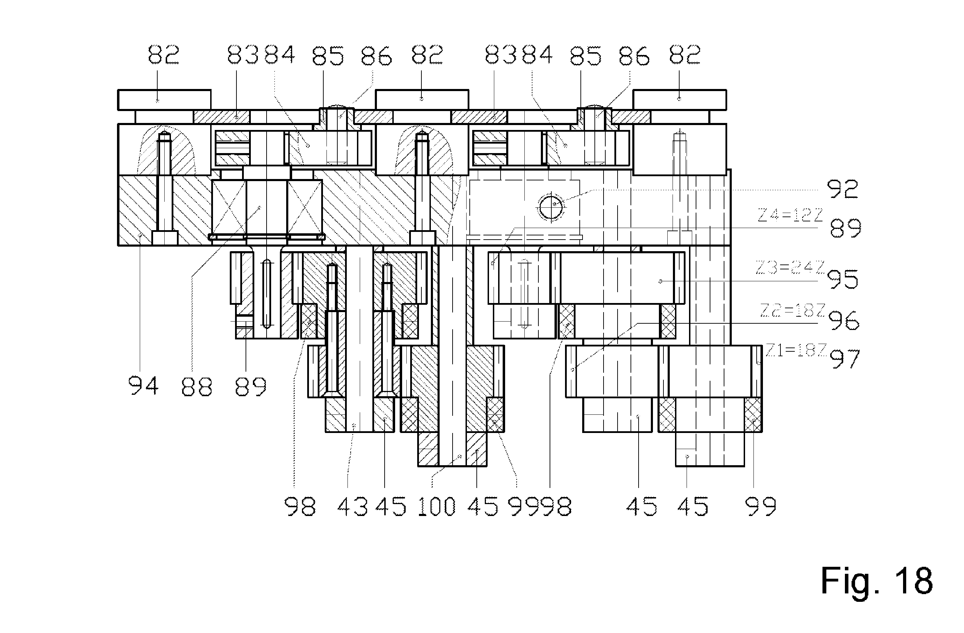

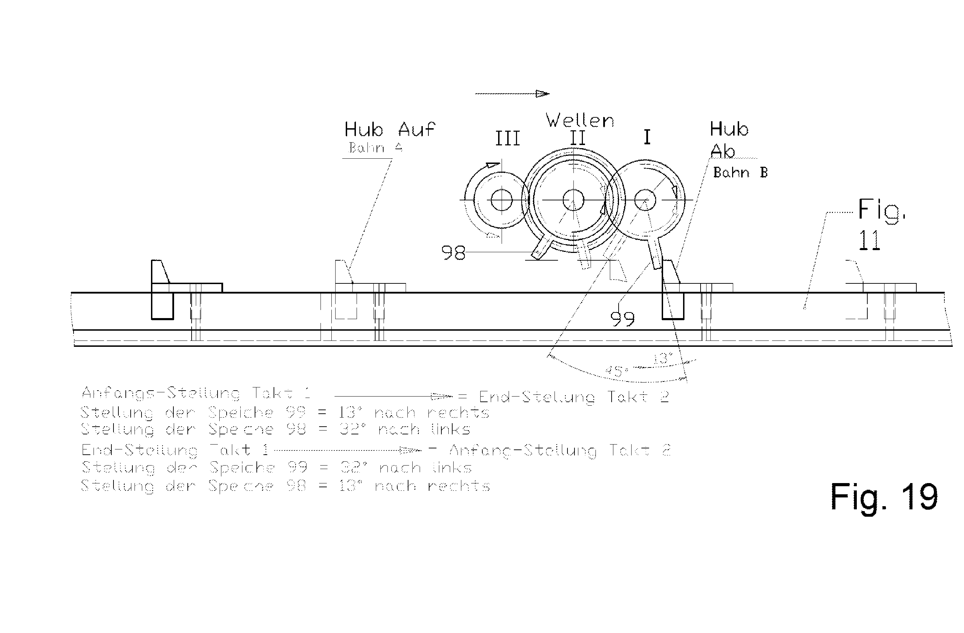

Fig. 18 zeigt zwei Schritt-Umkehr-Getriebe mit Hubgetriebe im Teilschnitt zur Steuerung eines LPMM oder RPMM. Fig. 19 zeigt ein Schalt-Schema für das Schritt-Umkehr-Getriebe aus Fig. 18.

Das Getriebe weist drei Wellen auf. Auf der Welle I befindet sich ein Zahnrad mit vorgelagertem Schaltring mit Hebel (99), welcher auf einen feststehenden Anschlag-Nocken (57), wie in Fig. 11 dargestellt, aufläuft. Bei diesem Zusammentreffen wird der Schaltring mit Hebel (99) um 45 Grad im Uhrzeigersinn gedreht. Diese Drehung betätigt das Zahnrad (97) auf Welle I das im Eingriff mit Zahnrad (96) auf Welle II steht.

Das Zahnrad (96) auf Welle II dreht sich um 45 Grad gegen den Uhrzeigersinn. Mit diesem Zahnrad verbunden liegt dahinter der Schaltring mit Hebel (98) und wird dadurch in die nächste Schaltposition gebracht (siehe Fig. 19). Hebel (99) und Hebel (98) haben getrennte Anschlag-Nocken (57) auf getrennten Bahnen. Den Bahnen sind die Magnetstellungen NORD oder SÜD jeweils zugeordnet.

Ein drittes Zahnrad (95) überträgt die Drehbewegung um 45 Grad auf Zahnrad (89) mit einer Übersetzung 1:2 auf die Exzenterwelle (88) des Exzenters (84). Somit dreht die Exzenterwelle (88) den Exzenter (84) um 90 Grad nach jedem Schaltschritt in die entgengesetzte Richtung. Diese Exzenterwelle (88) überträgt die Bewegungen auf den Hubschieber (83) mit der damit verbundenen Zahnstange (78) (dargestellt in Fig. 17). Die Zahnstange dreht die im Eingriff befindlichen Ritzel der Magnetwellen um jeweils 180 Grad.

Ferner zeigt Fig. 18 eine Schieberführung (82), eine Führungsrolle (85), einen Führungsbolzen (86), Befestigungsgewinde (92) für die Lager I - III, ein Lager III (94) für das Schritt-Umkehr-Getriebe und eine Welle II (100).

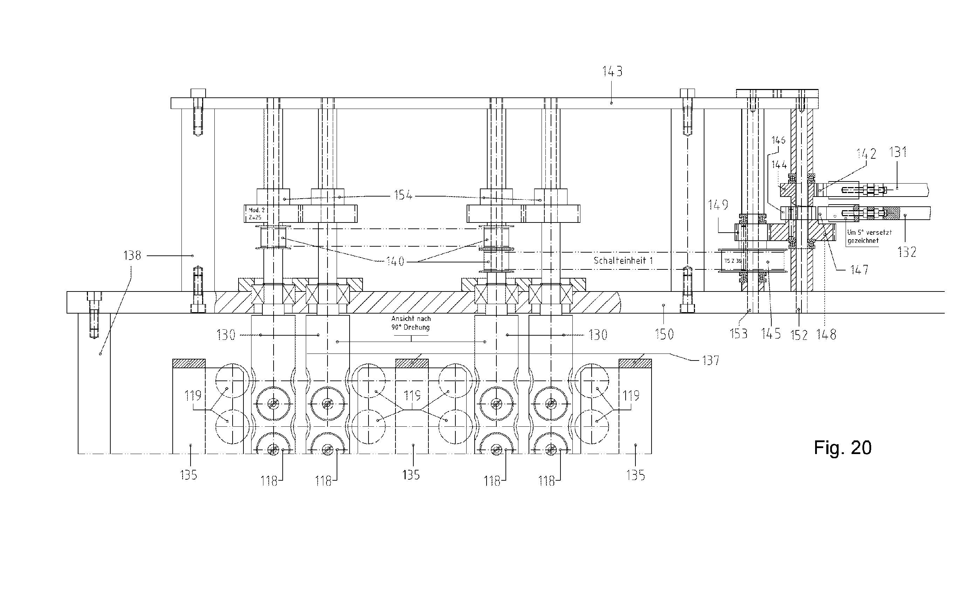

Fig. 20 zeigt einen Teillängsschnitt durch einen RPMM mit zwei getrennten Magnetbahnen und einer ersten Schalteinheit (Schalteinheit 1).

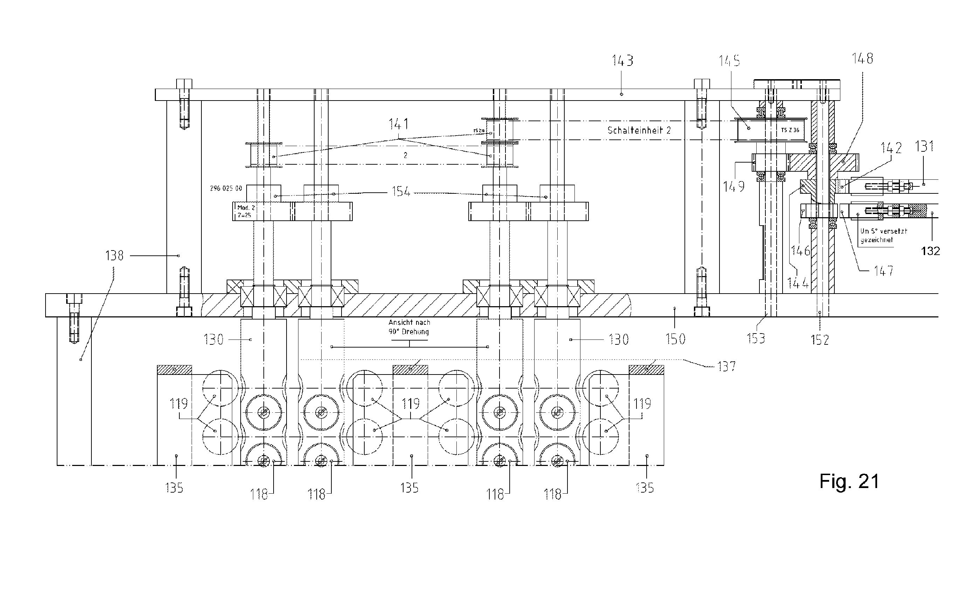

Fig. 21 zeigt einen Teillängsschnitt durch einen RPMM mit zwei getrennten Magnetbahnen und einer zweiten Schalteinheit (Schalteinheit 2).

In Fig. 20 und Fig. 21 sind dem Motor als Erweiterung ein weiterer Magnet-Halter (130) zugeordnet, sodass auf jeder Magnet-Bahn die Magnet-Halter (130) paarweise angeordnet sind. Die Drehung des hinzugekommenen Magnet-Halters (130) übernimmt ein Zahnrad-Paar (154). Ein Lagersegment (143) ist über eine Säule (138) an den Motor angebracht.

Die Polumkehrmagnete sind stationär und die Magnetpakete rotieren. Der Permanent-Magnet-Motor RPMM wird gesteuert durch zwei Steuer-Scheiben mit Schalt-Nocken und Schalt-Rad. Die beiden Steuer-Scheiben (131 und 132) besitzen paarweise angeordneten Schalt-Nocken (142 und 147). Die obere Steuer-Scheibe (131) mit Schalt-Nocken (142) ist die Drehung der Magnet-Halter (130) von Süd auf Nord zugeordnet. Die untere Steuer-Scheibe (142) mit Schalt-Nocken (147) ist der Drehung der Magnet-Halter (130) von Nord auf Süd zugeordnet. Dadurch wird erreicht, das Fehlschaltungen durch falsche Polzuordnung nicht möglich sind.

Die Drehrichtung des Rotors (5) erfolgt im Uhrzeigersinn. Das Schalt-Rad (144 und 146) bildet eine Einheit und ist den Steuer-Scheiben (131 und 132) zugeordnet. Die Schalt-Nocken (142) schalten das Schalt-Rad (144), die Schalt-Nocken (147) das Schalt-Rad (146). Das Schalt-Rad (144 und 146) wird durch jeweils einen Schalt-Nocken um 45 Grad gedreht. Das mit dem Schalt-Rad (144 und 146) verbundene Zahn-Rad (148) überträgt die Drehung auf das Zahnrad (149) im Verhältnis 1:2. Kraftschlüssig auf der gleichen Welle ist das Zahn-Riemen-Rad (145), welches die Drehung von 90 Grad in der Schalteinheit 1 wie in Fig. 20 dargestellt auf das Zahn-Riemen-Rad (140) und in der Schalteinheit 2 wie in Fig. 21 dargestellt auf das Zahn-Riemen-Rad (141) im Verhältnis 1:2 überträgt. Somit dreht der Magnet-Halter (130) um 180 Grad, wobei die Zahnräder (154) in einander greifen.

Die Magnet-Halter (135) sind mit der Grundplatte für Magnet-Halter als Einheit gefertigt und werden in hierfür vorgefertigte Ausfräsungen des Rotor (5) eingeschoben und verschraubt. Die Magnet-Halter (130) aus Messing sind mit Eindrehungen zur Aufnahme der Magnete (118) versehen. In der Lager-Platte (150) sind die Magnet-Halter (130) wie auch die Wellen (152 und 153) gelagert. Durch diese Bauart erhält der Rotor (5) eine größere Schwungmasse.

Die Antriebskomponenten für die Magnet-Halter (130) sind fest montiert und können zur Einstellung und Inspektion gut erreicht werden. Die Montage der Magnet-Halter (130) erfolgt vormontiert durch Bohrungen in der Grundplatte (71) und dem Rotor (5).

### BEZUGSZEICHENLISTE

- 1: Grundplatte
- 2: Lagerung für Rotorachse
- 3: Lagerung für Rotor
- 4: Freilauf ( Rücklaufsperre)
- 5: Unterer Rotor
- 5a: Oberer Rotor
- 6: Lagerring für Umpolmagnete
- 7: Lagerring für Umpolmagnete
- 8: Lagerring für Umpolmagnete
- 9: Lagerring für Umpolmagnete
- 10: Distanzring
- 11: Abschlussring mit Drei-Punkt-Lagerung
- 12: Zahnrad für Steuerung
- 13: Welle für Steuerung
- 13a: Welle für Steuerung
- 14: Flex-Kupplung
- 15: Winkel-Codierer
- 15a: Schaltnocken
- 16: Schrittmotor
- 17: Zahnrad
- 18: Magnet zum Polwechsel (Polumkehrmagnet)
- 19: statischer Magnet
- 20: Zentrier-Ring
- 21: Zahnrad
- 22: Schwungmasse
- 23: Lagerbuchse
- 24: Zahnrad für Kraftabtrieb
- 25: Rotorachse
- 26: Rotorträger
- 27: Magnetwelle
- 28: Lagergehäuse für Winkel-Codierer
- 28a: Lagergehäuse für Schaltscheibe
- 29: Flexible Kupplung
- 30: Inductive Sensoren
- 31: Verstellarm
- 32: Rücklaufsperre für Welle 13
- 33: Lager für Welle 13
- 34: Verstellspindel
- 35: Kugelgelenk
- 36: Verstellmutter
- 37: Gelenk
- 38: Schaltscheibe
- 39: Ausleger
- 40: Führungswelle
- 41: Zahnrad 3
- 42: Kugellager
- 43: Welle I
- 44: Zahnrad 2
- 45: Stellring
- 46: Taktrad II
- 47: Taktrad I
- 48: Zahnrad 1
- 49: Lager I für Rotationstaktantrieb
- 50: Lager mit Rücklaufsperre
- 51: Welle III
- 52: Zahnrad IV
- 53: Zahnrad V
- 54: Welle II
- 55: Nut für Winkelträger
- 56: Steuerleiste
- 57: Anschlag-Nocken
- 58: Druck-Platte
- 59: Einstell-Schlitz
- 60: Schrauben für Höheneinstellung
- 61: Führungsleiste
- 62: Gewinde für Befestigung an der Schlittenplatte oder dem Rotor
- 63: Schlitten-Platte
- 64: Winkelträger für Magnetwellen
- 66: Magnet-Halter
- 67: Magnet Winkel-Schiene
- 68: Station
- 69: Magnet-Träger statische Magnete
- 70: Magnet-Träger statische Magnete Ausleger
- 71: Grundplatte
- 72: Verbindungsteil
- 73: Welle für Magnet-Halter
- 74: Syncron Zahnrad
- 75: Zwischenrad
- 76: Winkel für Traverse
- 77: Traverse
- 78: Zahnstange
- 81: Träger für Magnet-Halter
- 82: Schieberführung
- 83: Hubschieber
- 84: Exzenter
- 85: Führungs-Rolle
- 86: Führungs-Bolzen
- 88: Exzenter-Welle
- 89: Zahnrad für Exzenter-Welle
- 92: Befestigungsgewinde für Lager I-III 93 Motor-Halterung
- 94: Lager III für Schritt-Umkehr-Getriebe
- 95: Zahnrad Z 3 für Schritt-Schalt-Getriebe
- 96: Zahnrad Z 2 für Schritt-Schalt-Getriebe
- 97: Zahnrad Z 1 für Schritt-Schalt-Getriebe
- 98: Schaltring 1 mit Hebel
- 99: Schaltring 2 mit Hebel
- 100: Welle II
- 102: Lager-Klotz mit Kugel
- 103: Zwischenboden für Bogensegment aus Fig. 11
- 104: Zahnstange
- 105: Zahnrad
- 106: Verstell-Welle
- 107: Zuganker
- 108: Distanz-Buchse II
- 109: Distanz-Buchse I
- 110: Ring für Sensoren
- 111: Feineinstellung für Schaltpunkt
- 112: Verbindungsteil
- 113: Magnet-Halter
- 114: Magnet-Träger für statische Magnete
- 115: Ausleger für statische Magnete
- 118: Polumkehrmagnet
- 119: Statischer Magnet
- 127: Spule
- 130: Magnet-Halter
- 131: Steuerscheibe I
- 132: Steuerscheibe II
- 135: Magnet-Halter für Rotormagnete
- 137: Zentriersegmente für Magnet-Halter Rotormagnete
- 138: Säule
- 140: Zahnriemenrad Z 18 der Schalteinheit 1
- 141: Zahnriemenrad Z 18 der Schalteinheit 2
- 142: Schalt-Nocken für Schaltrad 1
- 143: Lager-Segment
- 144: Schaltrad 1
- 145: Zahnriemenrad Z 36
- 146: Schaltrad 2
- 147: Schalt-Nocken für Schaltrad 2
- 148: Zahnrad Z 40 Mod. 1,5
- 149: Zahnrad Z 20 Mod. 1,5
- 150: Lager-Platte
- 152: Welle für Schaltrad
- 153: Welle für Übersetzung
- 154: Zahnrad
- 201: Position
- 202: Position
- 301: Position
- 302: Position

## Patentansprüche

1. Anordnung aus Permanentmagneten zur insbesondere auf magnetischen Anziehungs- und Abstoßungskräften beruhenden Relativbewegung eines ersten und eines zweiten Bauelementes zueinander,
- wobei die Permanentmagnete (18, 19, 118, 119) im Wesentlichen die Form eines geraden Kreiszylinders aufweisen und sich ein magnetischer Pol im Bereich der Deckfläche des Kreiszylinders und ein magnetischer Pol im Bereich der Grundfläche des Kreiszylinders befindet,
- wobei statische Magnete (19, 119) lagefest mit dem ersten Bauteil verbunden sind,
- wobei Polumkehrmagnete (18, 118) in dem zweiten Bauteil senkrecht zu ihrer Zylinderachse drehbar gelagert sind, und
- mit einer Steuereinrichtung zur Steuerung der Rotationslage und/oder Rotationsbewegung einzelner oder mehrerer Polumkehrmagnete (18, 118) senkrecht zu ihrer Zylinderachse.

2. Anordnung nach Anspruch 1, wobei die Steuereinrichtung in einem Zustand der Relativbewegung, in dem der Abstand zwischen einem der statischen Magneten (19, 119) und dem räumlich nahe liegendsten Polumkehrmagneten (18, 118) ein Minimum annimmt, die Lage des Polumkehrmagneten (18, 118) durch Drehung dessen Zylinderachse, insbesondere durch Drehung um 180 Grand, von einer Stellung, in der sich ungleichnamige Pole des statischen Magneten (19, 119) und des Polumkehrmagneten (18, 118) gegenüberstehen, in eine Stellung, in der sich gleichnamige Pole gegenüberstehen, ändert.

3. Anordnung nach einem der vorhergehenden Ansprüche, wobei die Steuereinrichtung einzelne oder mehrere Polumkehrmagnete (18, 118) von einer ersten Lage in eine zweite um 180° gedrehte Lage verbringt.

4. Anordnung nach einem der vorhergehenden Ansprüche, wobei die Relativbewegung zwischen dem ersten und zweiten Bauteil eine Rotationsbewegung ist, das erste Bauteil als Stator oder Rotor ausgebildet ist und das zweite Bauteil entsprechend als Rotor oder Stator ausgebildet ist.

5. Anordnung nach einem der Ansprüche 1 - 3, wobei die Relativbewegung zwischen dem ersten und zweiten Bauteil eine lineare Translationsbewegung ist, das erste Bauteil als beweglicher Schlitten (63) oder als Grundplatte (71) ausgebildet ist und das zweite Bauteil entsprechend als Grundplatte (71) oder beweglicher Schlitten (63) ausgebildet ist.

6. Anordnung nach einem der vorhergehenden Ansprüche, wobei die Steuereinrichtung als Schritt- oder Servomotor ausgebildet ist.

7. Anordnung nach einem der Ansprüche 1 - 5, wobei die Steuereinrichtung als Rotation-Takt-Getriebe ausgebildet ist.

8. Anordnung nach einem der Ansprüche 1 - 5, wobei die Steuereinrichtung als ein Schritt-Umkehr-Getriebe ausgebildet ist.

9. Anordnung nach einem der vorhergehenden Ansprüche, wobei die Steuereinrichtung ein Hubgetriebe aufweist.

10. Anordnung nach einem der vorhergehenden Ansprüche, wobei statische Magnete als Spule (127) mit Kupferwicklung ausgeführt sind.

11. Verfahren zur Erzeugung einer Relativbewegung eines ersten und eines zweiten Bauelementes zueinander durch Permanentmagnete,
- wobei die Permanentmagnete (18, 19, 118, 119) im Wesentlichen die Form eines geraden Kreiszylinders aufweisen und sich ein magnetischer Pol im Bereich der Deckfläche des Kreiszylinders und ein magnetischer Pol im Bereich der Grundfläche des Kreiszylinders befindet,
- wobei statische Magnete (19, 119) lagefest mit dem ersten Bauteil verbunden sind, und
- wobei Polumkehrmagnete (18, 118) in dem zweiten Bauteil senkrecht zu ihrer Zylinderachse drehbar gelagert sind,
mit folgenden Verfahrensschritten:
- Verbringen eines Polumkehrmagneten (18, 118) durch Drehung um dessen Zylinderachse in eine Stellung, in der sich ungleichnamige Pole des statischen Magneten (19, 119) und des räumlich naheliegendsten Polumkehrmagneten (18, 118) gegenüberstehen
- Detektieren eines Zustands der Relativbewegung, in dem der Abstand zwischen dem statischen Magneten (19, 119) und dem räumlich nahe liegendsten Polumkehrmagneten (18, 118) ein Minimum annimmt,
- Verbringen des Polumkehrmagneten (18, 118) durch Drehung um dessen Zylinderachse in eine Stellung in der sich gleichnamige Pole des statischen Magneten (19, 119) und des räumlich naheliegendsten Polumkehrmagneten (18, 118) gegenüberstehen, wenn der Zustand der Relativbewegung, einen Zustand annimmt, in dem der Abstand zwischen dem statischen Magneten (19, 119) und dem räumlich nahe liegendsten Polumkehrmagneten (18, 118) ein Minimum annimmt.
